# EUROPEAN PATENT APPLICATION

(11) **EP 1 671 778 A1**
(43) Date of publication of application: **21.06.2006**
(21) Application number: 03751419.7
(22) Date of filing: 09.10.2003
(51) Int. Cl.: B29C 47/82, B29C 47/08, B29C 47/10, B29C 47/12, B29K 105/04

(54) **EXTRUSION MOLDING MACHINE**

(71) Applicant: MISAWA HOMES CO., LTD, Tokyo 168-8533 (JP)
(72) Inventor: KAMITE, Masayuki, MISAWA HOMES CO., LTD., Tokyo 168-8533 (JP); ABIKO, Haruhiko, MISAWA HOMES CO., LTD., Tokyo 168-8533 (JP)
(74) Representative: Goddar, Heinz J.
(86) International application number: PCT/JP2003/012966
(87) International publication number: WO 2005/035222

(57) **Abstract**

The said invention relates to an extrusion molding machine (11), which is composed of a storage bin (30) supplying foam material (1), a cylinder (50) and a screw (70) for mixing and transporting foam material (1) from storage bin (30), a tank (40) provided with piping connecting storage bin (30) and screw (70) and storing water (41), a mold (80) connecting to the front end (6) of cylinder (50), and a heater (60) for melting the foam material (1) and at the same time heating water in six stages from the initial temperature below the boiling temperature of water (41) to the final temperature of total vaporization, from cylinder (50) bottom at storage bin (30) side to cylinder (50) front end (6) at mold (80) side.

## Description

### Technical field

The said invention is related to extrusion molding machine

### Background technology

In order to protect precision instruments, such as electronic instrument, electronic device and delicate articles such as fruits from outside impact, buffer packing materials are generally used. Such packing materials are foam materials consisting of polypropylene resins, which are foamed into foam body with tiny internal pores. Such foamed body is generally made by extrusion molding.

In the extrusion molding machine the foam material is fed into the cylinder and foaming fluid such as water or oil is also charged into the cylinder from a tank. The foam material and foaming fluid are mixed and transported in the cylinder by a screw and at the same time heated through the cylinder wall. The foaming fluid mixed into the foam material is transformed into a condensed or partly vaporized state under pressure in the cylinder. The foam material containing such condensed foaming fluid is extruded from the mold apertures. The foaming fluid is then depressurized and instantly vaporized upon extrusion to yield foamed product.

However, during the process of vaporization and foaming upon instant pressure release of the foam material containing foaming fluid, backflow of foaming fluid from cylinder to tank would occur sometimes because of sudden expansion resulting from vigorous vaporization. In such case, supply of foaming fluid would fluctuate and uniform cavities would not be generated in foam material. There exists the problem of failure to produce quality products and deteriorated manufacture efficiency.

### Description of the invention

The main purpose of the said invention is to provide an extrusion molding machine, which is capable of preventing backflow of foaming fluid and improving the manufacture efficiency.

The extrusion molding machine invented is characterized by a storage bin supplying foam material, a cylinder and screw for mixing and transporting foam material from storage bin, and a mold connected to the front end of cylinder for molding foamed product. The extrusion molding machine is equipped with a tank provided with a piping between the storage bin and screw and storing the foaming fluid, and a heater for melting such foam material and heating such foaming fluid by stages from cylinder bottom at the storage bin side to cylinder front end at the mold side from an initial temperature below its boiling point to the final temperature of total vaporization.

Conventional plastics such as polyethylene (PE), polypropylene (PP), polyamide (Nylon-6, Nylon-66, etc.), polyethylene terephthalate (PET) and biodegradable plastics such as poly-lactic acid resin can be used as foam material. Besides, specified additives, or extenders such as paper and starch can be added to foam material. In addition to extenders, pulverized wood powder, activated charcoal, spent tea or wood-derived material can also be added. In these cases, such additives can adsorb and absorb undesirable matter and inhibit the growth of bacteria and germs.

Heating in stages means heating from initial temperature to final temperature in several stages, such as in several sections of cylinder body. It could be structured to change the set temperature and to be heated by rise of temperature gradient in various stages. Given the set initial temperature and final temperature, the temperature in-between is not specifically designated; it could be a gradual increase of temperature or a decrease in the middle.

The extrusion molding machine of the said invention can manufacture foamed products as follows:
(1) First, the foam material in the storage bin is charged into the cylinder. The nozzle on the tank injects the foaming fluid into the piping between the storage bin and screw.
(2) Then the foam material containing foaming fluid in the cylinder is heated and is mixed uniformly by the screw. The foam material in the cylinder is heated in stages by the heater and reaches a molten state at the final temperature. The foaming fluid in the cylinder is heated from the initial temperature below its boiling point by stages to the final temperature of total vaporization. The foaming fluid is pressurized and partly condensed in the molten foam material and such uniformly mixed material is transported by the screw to the cylinder front end at the mold side:
(3) The mixed material is then extruded through the mold by screw rotation into a designated shape and discharged from the apertures of the mold. The condensed foaming fluid, which is contained in the mixed material extruded to the outside, is instantly vaporized upon release of pressure and foam material itself is suddenly cooled and hardened to form the foamed product with internal pores.
(4) The finished product is obtained after cutting to an appropriate dimension.

The foaming fluid charged into the cylinder is heated in stages along with mixed material. In contrast with instant heating to boiling temperature, sudden expansion of foaming fluid does not happen and backflow to the tank can be prevented.

Besides, foaming fluid is not directly supplied to the screw but is passed via a piping between storage bin and screw, excluding the effect of change of foaming fluid in the cylinder, which further prevents backflow of foaming fluid into the tank. Foamed product with stable quality can thus be effectively manufactured.

In the extrusion molding machine of the said invention water is used as the foaming fluid. The above-mentioned initial temperature of heater is set above 60°C and below 100°C. The above-mentioned final temperature is set above 160°C and below 240°C. Preferably heating of foam material and foaming fluid is made in six stages.

With such structure, water charged into the cylinder is first heated by the heater to below its boiling point (100°C under normal pressure) and is further heated in six stages and finally to the condition of being above 160°C and below 240°C. The water once vaporized after heating is then condensed following pressurization in the space enclosing the cylinder and the mold by the foam material, which is pushed forward during transportation. After being extruded from the mold, the foaming fluid instantly vaporizes again upon release of pressure to generate fine pores in the foam material. With the easily available water as foaming fluid, heating in stages can prevent backflow of water and foamed product with stable quality can be manufactured effectively at a low cost.

In the extrusion molding machine of the said invention such foam material is particulate, and a vibrating mechanism to cause intermittent vibration on the side of storage bin in the lateral direction is preferably set up.

Particulate foam material can be powdery, granular, palletized, pulverized, and the like.

Vibrating mechanism can be a motor-driven cam device, which can knock the side of storage bin to effect vibration, or an electromagnetic device composed of plate spring and magnet to effect electromagnetic vibration.

With the use of vibrating mechanism, coalesced particulate foam material can be loosened and separated by intermittent knocking of storage bin and stable supply of particulate foam material can be guaranteed.

In the extrusion molding machine of the said invention, an electric motor and a motor-driven cam are set up and knocking of storage bin by the cam is used to cause vibration of the bin.

In such condition a simple vibration mechanism can be set up by mounting a cam on the electric motor with its front end knocking the side of storage bin.

In the extrusion molding machine of this invention, multiple apertures for extrusion purpose are disposed on the mold, with the apertures arranged in equally shaped triangles formed by three neighboring apertures.

Quality problems of foamed product may occur sometimes, such as absence of foaming, swelling and defect caused by over-foaming, plugging and adhesion by non-molten material on mold apertures, etc. However in this invention the simple structure of and equal distance between apertures is able to effectively manufacture the foamed product with stable quality.

In the extrusion molding machine of the said invention such multiple apertures are circular shaped, preferably 1.8 mm-2.2 mm in diameter.

In the case of apertures smaller than 1.8 mm in diameter, insufficient foaming sometimes may occur. In the case of apertures larger than 2.2 mm in diameter, insufficient foaming sometimes is also a concern. The optimized range of aperture diameter can ensure manufacture of foamed product with sufficient foaming and good quality.

In the extrusion molding machine of the said invention, a temperature control device is preferably set up to adjust the mold temperature in the range of 160°C -220°C.

At a mold temperature lower than 160°C, insufficient foaming may occur sometimes, when heating is realized by means of temperature control device. At a mold temperature higher than 220°C, overheating may occur sometimes, causing scorching due to thermal deterioration. Control of mold temperature in an appropriate range can further ensure manufacture of foamed product with sufficient foaming and good quality.

In the extrusion molding machine of this invention, a shearing device, which rotates with a definite speed to replace the above-mentioned mold, can be set up on the cylinder front end to cut off foamed product extruded from the cylinder.

The shearing device can be structured as a connector to the cylinder to receive the mixed material extruded and as a main body to cut off the foamed product generated from the extruded mixed material.

By using such structure the foamed product of any length can be manufactured by adjusting the rotating speed of shear knife, and the speed for extrusion of mixed material―for example, the screw rotating speed.

### Illustrations of attached drawings

Figure 1 is the sketch diagram of extrusion molding machine of No. 1 Embodiment of this invention.
Figure 2 is the exploded oblique diagram of cylinder and mold of above-mentioned No. 1 Embodiment.
Figure 3 is the front view of above-mentioned mold.
Figure 4 is the sketch diagram of plate-shaped foamed product of above-mentioned No. 1 Embodiment.
Figure 5 is the sketch diagram of extrusion molding machine of No. 2 Embodiment of this invention.
Figure 6 is the oblique diagram of shearing device of above-mentioned No. 2 Embodiment.
Figure 7 is the sketch diagram of cylinder-shaped foamed product of above-mentioned No. 2 Embodiment.

### Embodiment modes

### No. 1 Embodiment

No. 1 Embodiment of this invention is illustrated with diagrams.

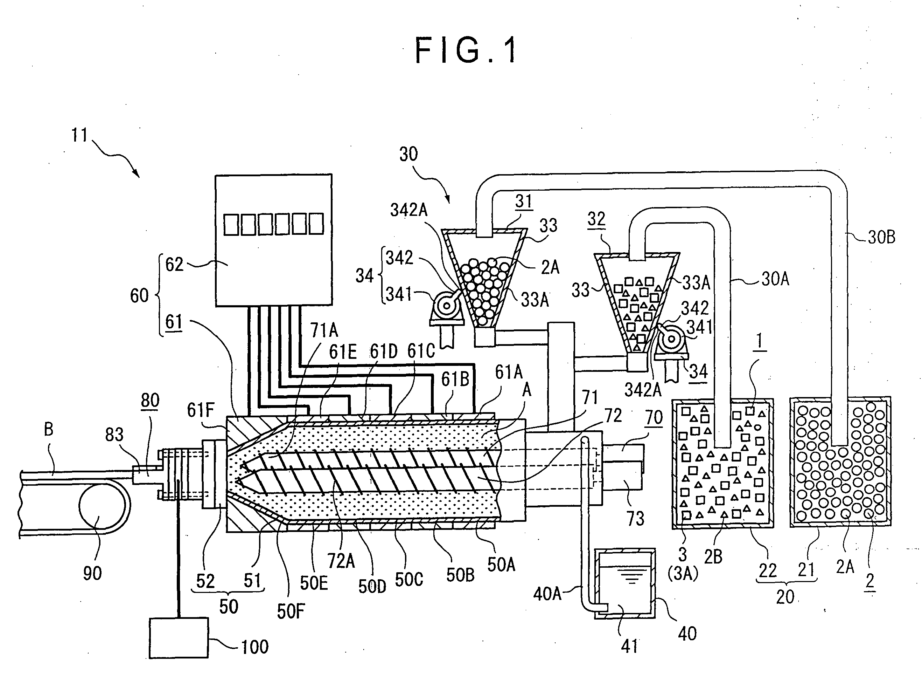

Figure 1 is the sketch diagram of the extrusion molding machine of this invention.

As shown in Figure 1, the extrusion molding machine (11) is the machine for heating and melting the thermoplastic resin foam material (1) such as polypropylene and extruding the molten foam material into a designated shape to form foamed product with internal pores. It consists of foam material tank (20), storage bin (30), fluid tank (40), cylinder (50), heater (60), screw (70) and mold (80) in cylinder, belt conveyor (90), and temperature control device (100) for adjusting mold temperature within 160°C - 220°C.

The foam material (1) is mainly composed of a matrix material (2) and an additive (3), which helps to make the matrix material uniformly dispersed.

The matrix material (2) contains 40 wt% of resin component--powdery polypropylene (2A) and 60 wt% of non-resin component--corn starch (2B). The melting point of polypropylene (2A) is 160°C. In addition to powdery polypropylene, other shaped materials including the particulate polypropylene can be used.

Additive (3) is the talc powder (3A) added at a specified weight percentage against the matrix material.

The so-called resin component refers to such matter that cannot be disposed of as general refuse.

Non-resin component refers to the components other than recyclable matter such as metal, paper, glass and plastics, which cannot be recycled and can be disposed of as general refuse.

The so-called additive is the foaming modulator used during foaming of the foam material to regulate the foaming condition.

The raw material tank (20) consists of No.1 tank (21) for supplying polypropylene (2A) and No.2 tank (22) for supplying a uniform mixture of cornstarch (2B) and talc powder (3A).

Storage bin (30) temporarily stores foam materials 2A, 2B, and 3A from tank (20) and automatically feed the cylinder (50) with specified amounts of 2A, 2B and 3A. Storage bin (30) consists of No.1 storage bin (31) connecting No. tank (21) with piping (30A) and No.2 storage bin (32) connecting No.2 tank (22) with piping (30B).

No.1 storage bin (31) temporarily stores polypropylene (2A) and feeds polypropylene (2A) into the cylinder (50). No.1 storage bin (31) consists of conical shaped main body (33) and a vibrating mechanism (34), which intermittently knocks, the side (33A) of main body (33) to cause vibration. Due to good mobility of polypropylene, the vibrating mechanism (34) may not be necessary.

Vibrating mechanism (34) consists of an electric motor (341), a cam (342) mounted on the motor (341). Driven by motor (341), the cam (342) rotates and its front end (342A) periodically knocks the side (33A) of the main body (33).

With the vibration on the side (33A) of the bin main body (33), in storage bin (33) even the coalesced polypropylene (2A) can be loosened, and it can fall down along the conical body and move into the cylinder (50).

No.2 storage bin (32) temporarily stores cornstarch (2B) and talc powder (3A) and feeds such raw materials (2B) and (3A) into cylinder (50). As described above, No. 2 storage bin consists of main body (33) and a vibrating mechanism (34).

The foaming fluid tank (40) stores water (41) as the foaming fluid and feeds water (41) into cylinder (50) via a piping (40A) connecting the storage bin (30) with the screw (70).

Cylinder (50) is a hollow box, which stores foam material (1) from storage bin (30) and water (41) from fluid tank (40). It consists of main body (51) and discharge section (52) on the left side of main body (51) in Figure 1.

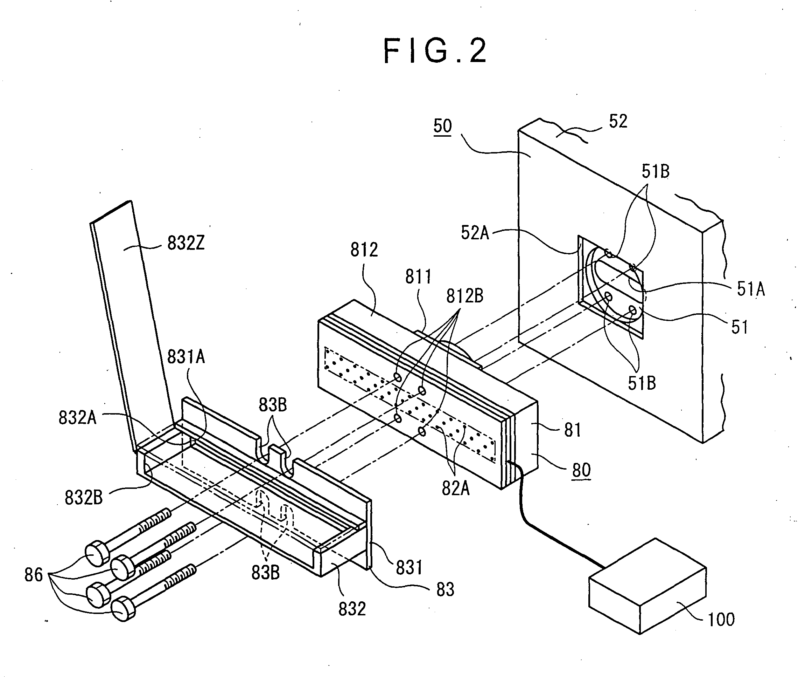

Figure 2 is an exploded oblique view of a part of the cylinder (50) and the mold (80). As shown in Figure 2, an elliptically shaped opening (51A) for discharge of mixed foam material and four bolt holes (51B), two each on the upper and lower sides of discharge opening are located on main body (51) of cylinder.

Discharge section (52) consists of a discharge opening (51A) and four bolt holes (51B) and fit holes (52A) to match a part of mold (80).

Back to Figure 1, the heater (60) independently heats six locations (50A, 50B, 50C, 50D, 50E, 50F) of the cylinder body (50). The heater (60) is equipped with six sub-heaters (61A, 61B, 61C, 61D, 61E, 61F) in different sections (50A, 50B, 50C, 50D, 50E, 50F) of cylinder body (50) and a temperature controller (62) for controlling the temperatures of such sub-heaters (61 A, 61B, 61C, 61D, 61E, 61F) respectively.

Specifically, six sections (50A, 50B, 50C, 50D, 50E, 50F) of the cylinder on the right of Figure 1 are designated six temperature intervals, depending on raw material adopted, its moisture and meteorological conditions.

| | |
|---|---|
| (1) First section (50A): | 80°C (Initial temperature) |
| (2) Second section (50B): | 145°C |
| (3) Third section (50C): | 185°C |
| (4) Fourth section (50D): | 175°C |
| (5) Fifth section (50E): | 170°C |
| (6) Sixth section (50F): | 230°C (Final temperature) |

The set temperature and measured temperature of every location (50A, 50B, 50C, 50D, 50E, and 50F) is displayed on the heater main body (61).

The screw (70) mixes the foam material (1) and water (41) in cylinder (50), transports such mixed material (A) and discharges to the outside through the discharge section (52) of cylinder (50). Screw (70) consists of a bi-axial structure of two screws (71) and (72) and a drive (73).

Screws (71) and (72) are aligned in parallel in the cylinder (50). Screw threads (71 A) and (72A) develop in the same direction on screws (71) and (72).

The drive (73) rotates screws (71) and (72) as they approach each other.

In the cylinder (50) charged with mixed material (A), two screws (71 and 72) rotate in the same direction driven by the drive (73), and the mixed material (A) is pushed towards the discharge section (52) by screw threads (71 A) and (72A).

As shown in Figure 1 and Figure 2, the mold (80) is a metallic part functioning to generate the foamed product (B) with internal pores from mixed material (A) discharged from the discharge section (52) of cylinder (50) and to mold such foamed product into the desired shape. It consists of a No.1 component (81) with four parts and a No.2 component (83) installed on the discharge side of the No.1 component (81).

The No.1 component (81) consists of a raised part (811) to be matched with fit holes (52A) on the discharge section (52) of cylinder (50) and a rectangular main body (812).

On the opposite side of the raised match part (811) of the main body (812) there are multiple apertures (82A) of the same diameter 2.0 mm.

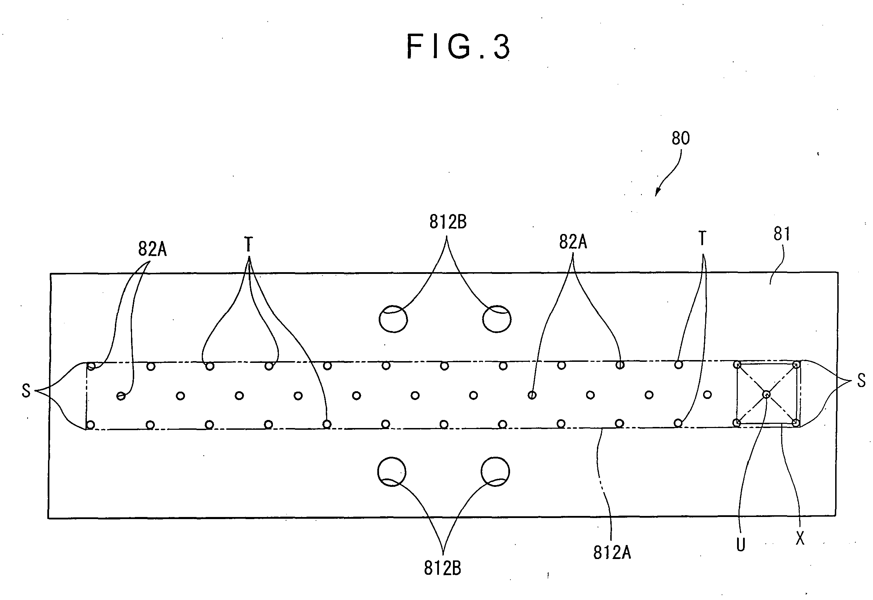

Figure 3 is the front view of the No.1 component main body (812) on the opposite side of raised match part (811).

As shown in Figure 3, such multiple apertures form a rectangle (812A) with its width larger in the horizontal direction being perpendicular to the direction of extrusion. The rectangle encompasses the four top positions (S), and points (T), which equally divide the long side of rectangle (812A), and the intersection of diagonals (U) of rectangles formed by four neighboring aperture locations. Such multiple apertures (82A) are arranged separately as three neighboring apertures in triangles equal in area and shape (pattern of arrangement). The rectangle (812A) corresponds with the shape of extruded foam material.

Four bolt holes (812B) are located on the upper and lower sides of the above-mentioned rectangle (812A) corresponding with four bolt holes (51B) on cylinder main body (51).

Back to Figure 2, No.2 component (83) functions to generate pores in mixed material (A) and yield foamed product (B) with specified cross section. No.2 component (83) consists of a base plate (831) to be installed on the first component (81) and a hollow box-shaped shaping section (832) on this base plate (831) with a certain length along the direction of extrusion.

On the base plate (831) there is a rectangular port (831A) corresponding with the locations of multiple apertures (82A) of the above-mentioned rectangle (812A).

On the base plate (831) of No.2 component (83), on the upper and lower sides of rectangular port (831A) there are four cutaways (83B) corresponding with the four bolt holes (812B) of No. component (81).

On the box-shaped shaping section (832) on the side of rectangular port (831A) there are supply side opening (832A) corresponding with the rectangular port (831A). Besides, on the opposite side of rectangular port (831A) there is an opening on the extrusion side with its shape similar to the supply side opening (832A). The shaping section (832) consists of a readily separable box-shaped upper part (832Z) and the interior can be exposed by removing the upper part to facilitate cleaning.

On the mold (80) four bolts (86) are used to fasten components (81 and 82) on cylinder (50) through corresponding cutaways (83B), bolt through holes (812B), and bolt holes (51 B).

Back to Figure 1, belt conveyor (90) is used for conveying the foamed product (B) from the extrusion opening (832B) on No.2 component (83) of mold (80) while performing rough cut of the foamed product (B). Not shown in the diagram, on the route of belt conveyor (90) there is a pressure roller for adjusting the thickness of product and a rough-cut shear. The rough-cut shear can adjust the width of foamed product (B) according to the speed of conveyor (90) and is equipped with a cooling fan and cutter for the foamed product. The finished foamed product is then delivered and kept in boxes. The final product can be sealed in bags to be delivered out of warehouse.

The following is the sequence of manufacturing the foamed product (B).
(1) The vibrating mechanism (34) is actuated to make the front end of cam (342) knock the side (33A) of storage bin body (33), at the same time a specified amount of polypropylene (2A) from No.1 storage bin (31) and specified amounts of raw materials (2B) and (3A) from No.2 storage bin (32) are fed into cylinder (50). A specified amount of water (41) from fluid tank (40) is also supplied to the supply piping between storage bin (30) and screw (70).
(2) Raw materials (2A, 2B and 3A) fed to screw (70) in cylinder (50) are mixed with water (41) by the rotation of screw to become a mixed material and transported to the mold (80).
At this time polypropylene (2A) is heated by the heater (60) and becomes totally molten on reaching above its melting point 160°C when it is transported to the location after section 3 (50C). Other raw materials (2B, 3A) are homogeneously dispersed in molten polypropylene (2A).
On the other hand, water (41) is heated by the heater (60). Section 1 (50A) of the cylinder (50) is set at 80°C and at this section 1 (50A) water is not totally vaporized and is almost in liquid state. Thereafter after section 2 (50B) water is heated to above its boiling temperature and is further vaporized. It is pressurized by the upcoming molten mixed material and confined in cylinder (50) while approaching the mold (80) and is partly condensed. So water exists in the mixed material (A) in a mixed state of steam and liquid.
(3) Mixed material (A) is discharged from the cylinder (50) by the rotation of screw (70), with its temperature set at a specified value by temperature control device (100). It is extruded from multiple apertures (82A) on No.1 component (81) as multiple thin and long strings.
(4) Mixed material (A) passes through multiple apertures (82A) as thin and long strings, and quickly expands into multiple thin and long foamed strings corresponding with multiple apertures (82A) upon sudden release of pressure. Such apertures are located in equal distance and such foamed strings can stick together into one piece of foamed product.
Water (41) as the foaming fluid turns into vapor with its volume increased by 1200 times. Hydrophilic additive is dissolved in water (41) in the mixed material (A) to achieve uniform foaming. A surplus of water is needed to guarantee quick expansion (foaming) of sufficient amount of water vapor. On the other hand, water (41) vaporizes upon coming out the mold by absorbing a corresponding amount of latent heat. In that case the water vapor inside the foamed structure will again be cooled and condensed. Such liquefied water (41) will make the foamed product (B) smaller and shrink. There will be a concern of insufficient foaming. The latent heat absorbed in this case is 2.26 MJ/kg (539 kcal/kg). A temperature control device (100) is used for continuous heating of mold (80) to prevent adverse condensation of water vapor in the foamed body and inhibit shrinkage of the foamed product (B).
In the case of using water as the foaming fluid, the pressure of mixed material (A) extruded from mold (80) should be maintained as follows in correspondence with the set temperatures. The pressure settings are listed in Table 1.
Set temperature 160°C: >0.618 MPa (6.3 kgf/cm²)
Set temperature 170°C: >0.795 MPa (8.1 kgf/cm²)
Set temperature 180°C: > 1.000 MPa (10.2 kgf/cm²)
Set temperature 190°C: > 1.255 MPa (12.8 kgf/cm²)
If a foaming fluid other than water is used, extrusion pressure should be maintained above 1.28 MPa (13 kgf/cm²).

**Table 1**

| Set temperature of temperature controller, °C | Pressure (MPa) |
|---|---|
| 160 | 0.618 |
| 170 | 0.795 |
| 180 | 1.000 |
| 190 | 1.255 |

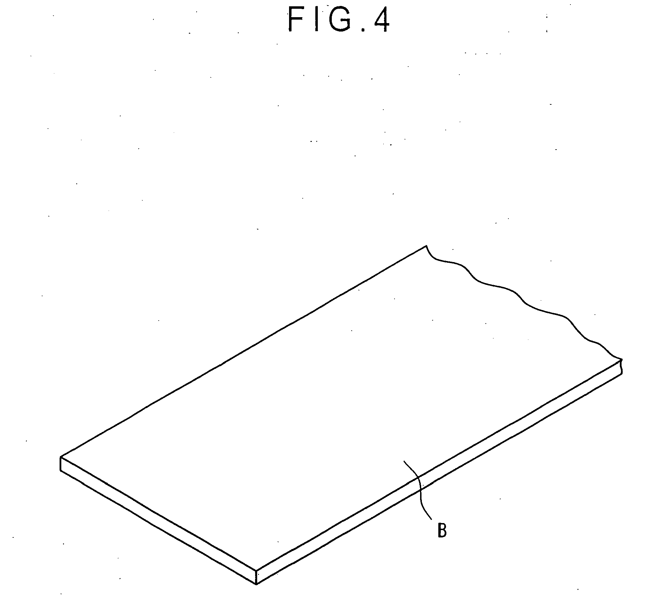

(5) Such foamed body (B) passes through the opening (831 A) of base plate (831) and the opening (832A) of the shaping section (832) into the shaping section (832) of No.2 component (83).
(6) As shown in Figure 4, the foamed body (B) in this shaping section (832) is pushed to the extrusion side opening (832B), configured into a shape with rectangular cross section and is extruded out of opening (832B).
(7) Plate-shaped foamed body (B) extruded continuously out of the opening (832B) is transported by belt conveyor (90) and is cut into specified shape.

The foamed product (B) is manufactured in the above sequence.

In this embodiment the following results are anticipated.
(1) Water (41) is transported by screw (70) into the cylinder (50) and is heated by a heater (60) by stages, and in contrast with heating directly to above its boiling temperature, the sudden expansion of vaporized water and consequently the backflow of water (41) into fluid tank (40) are prevented. Besides, water (41) is supplied to the piping between storage bin (30) and screw (70) instead of direct supply of water to screw (70) in cylinder (50), and it is not affected by any change of water (41) in cylinder (50), which further helps to prevent backflow of water. Effective prevention of backflow guarantees manufacture of foamed product (B) with stable quality.
(2) Water, which is easily available, is used as foaming fluid and is heated in six stages to prevent backflow. It can help to effectively manufacture foamed product (B) with stable quality.
(3) A vibration mechanism (34) is used to knock the side (33A) of storage bins (31, 32) to cause intermittent vibration. Any coalesced raw materials (2A, 2B, 3A) in storage bins (31, 32) can be loosened and particulate materials (2A, 2B, 3A) can be steadily supplied to the cylinder (50). The vibration mechanism is simply a cam (342) mounted on the electric motor (341) with the front end of cam (341) driven by motor to knock the side (33A) of storage bin (31, 32).
(4) The heater (60) applies a temperature controller (62) to control the temperature of six sections (50A, 50B, 50C, 50D, 50E, 50F) of cylinder (50) at the same time. Temperature adjustment can be made readily. With heater (60) the temperature of six sections of cylinder (50) can be adjusted with regard to the manufacture conditions and environment to manufacture high quality products.
(5) In No.1 component (81), multiple apertures arranged in triangles of three neighboring apertures can help to manufacture the foamed body (B) with simple and stable shape. Aperture diameter of 2.0 mm is also helpful to good foaming and stable shape.
(6) Temperature control device (100) adjusts the temperature of mold (80) within 160°C-220°C, which inhibits undesirable shrinkage and ensures good shape of foamed product (B).
(7) In No.1 component (81), a raised part (811) is designed to match the fit hole (52A) of discharge section (52) of cylinder (50). No.1 component (81) is prevented from falling apart or dislocating. Besides, leakage of water vapor under pressure can be prevented.
(8) In No.2 component (83), a certain length in the extrusion direction is allowed in the shaping section (832) to leave enough time for foamed body (B) to develop shape in the shaping section (832).
(9) In No.2 component (83), the upper part (832Z) is readily separable to ease cleaning the interior.
(10) (10) Two axles (71, 72) of screw (70) help to achieve uniform mixing of foam material (1) and water (41) and stable quality of foamed product.
(11) The refuse of main ingredient is the disposable non-resin components. The foamed product (B) is not required by law to be recycled and is disposed of as general refuse at a low cost. In contrast with general foamed articles, it contains less resin and burns with less heat evolved and without smoke, causing less contamination to environment. Such composition as an actual product can be turned into the foamed product (B) that can be fully utilized.
(12) The foamed product (B) with internal pores is suitable for use as buffer material in packaging precision instruments and delicate articles such as fruits. Besides, the foamed product (B) with high specific heat can be used for heat-insulated material.
(13) Polypropylene (2A) is adopted as the resin component. Polypropylene (2A) is a better resin due to its excellent processing performance and mechanical adaptability for manufacturing foamed product.
(14) Corn starch (2B) as a kind of plant source is easily available and inexpensive. It can reduce the cost for manufacture of the foamed product (B).
(15) The finished foamed product (B) is in the shape of a sheet to ensure some rigidity along with softness. It can be made into separation panels for fruits and vegetables or used for heat insulation. Besides, the foamed product (B) is sparingly soluble in water and is able to maintain its shape under pressure, so it can be used as buffer material in packaging.

### [No.2 Embodiment]

No. 2 Embodiment is illustrated with diagram as follows.

The extrusion molding machine (12) in No. 2 Embodiment of this invention is the same as the extrusion molding machine (11) in No.1 Embodiment, except for the part corresponding to the mold (80). In the extrusion molding machine (12) the mold (80) is replaced by a shearing device (200).

The same notations are used for the parts that are the same or equivalent to those used in the No.1 Embodiment with descriptions omitted or simplified.

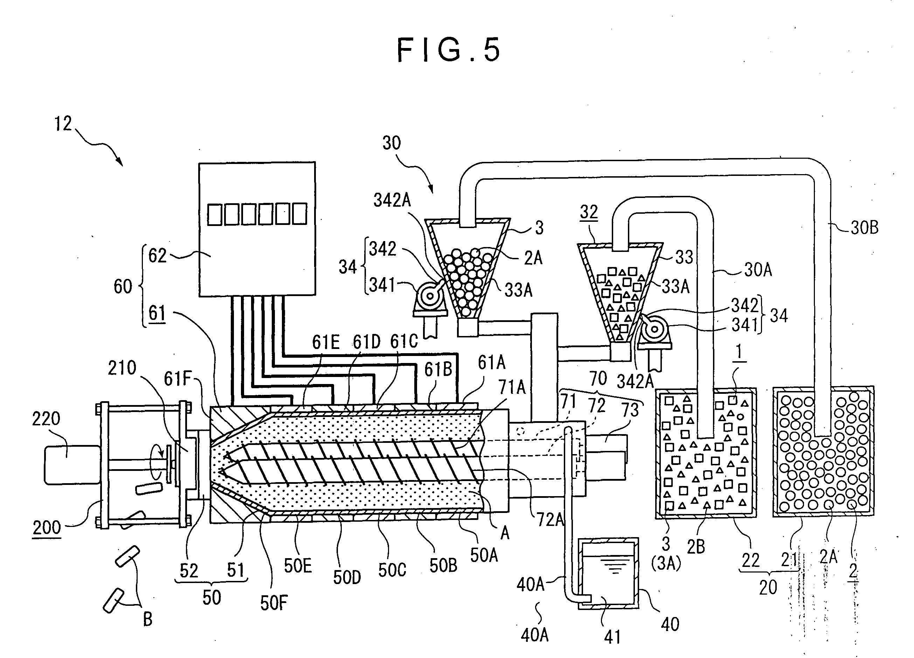

Figure 5 is the sketch diagram of extrusion molding machine (12).

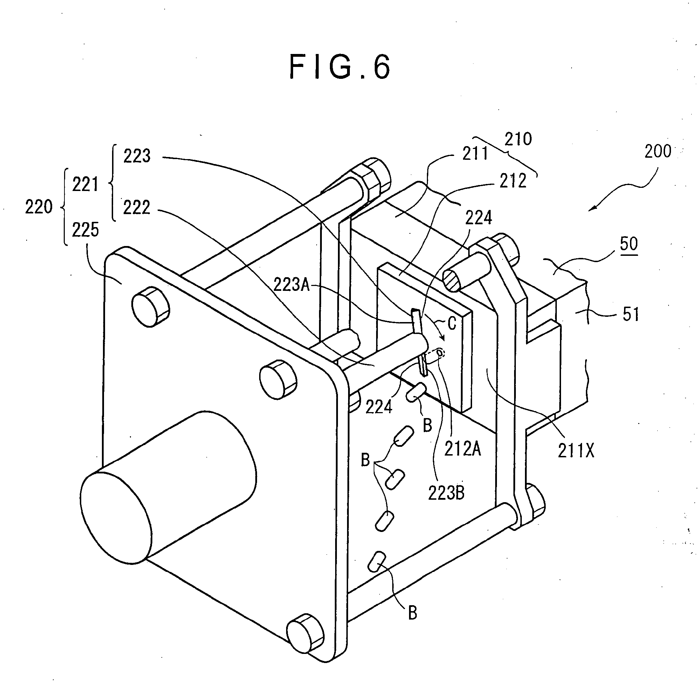

Figure 6 is the magnified view of shearing device (200).

As shown in Figure 5, shearing device (200) is the device to cut off the foamed product (B), which is generated from mixed material (A) extruded from the cylinder (50). The shearing device (200) consists of a mounting part (210) installed on the discharge section (52) of cylinder (50) and a main body (220).

As shown in Figure 6, the mounting part (210) is installed on the discharge section (52) of cylinder (50), where the mixed material (A) extruded from the cylinder (50) is foamed and shaped, performing the function of a mold. The mounting part (210) consists of a hollow box-shaped base part (211) and a plate-shaped auxiliary part (212) on the extrusion side of base part (211).

There is a through hole (212A) on the auxiliary part (212).

On the base part (211) there is a match part to be fitted with the fit hole (52A) on the discharge section (52) of cylinder (50), which is not shown in the diagram. There is a rectangular opening on the match part.

On the side (211X) of auxiliary part (212) on the extrusion side, there is a hole larger than the hole (212A) on the location corresponding to (212A), which is not shown in the diagram.

The mixed material (A) extruded from cylinder (50) passes through the interior of base part (211) and comes out of hole (212A) from auxiliary part (212). The mixed material (A) is foamed upon pressure release when it is extruded to become the foamed product (B).

Main body (220) of shearing device supports the mounting part (210) and cut off the foamed product (B) at a designated length, which is extruded from the mounting part (210). Main body (220) of shearing device consists of the axle (221) and the support (225), which props up the axle (221).

The axle (221) is the part for cutting off extruded foamed product (B). The axle (221) consists of axle part (222) and shearing knife (223) installed thereon.

Axle part (222) is driven by electric motor (not shown in diagram) and rotates at a designated speed. The rotating speed can be adjusted by a drive control mechanism.

Shearing knife (223) consists of two knives (223A, 223B) parallel with each other in a direction perpendicular to the axle. The front end (224) of knives (223A, 223B) rotates in respective directions as shown by arrow C in the diagram. When the knife (223A) rotates one cycle in the C direction, the knife front end (224) passes through the hole (212A) two times.

The support (225) is the part propping up the axle part (222) and mounting part (210).

In the above-mentioned extrusion molding machine (12), the mixed material (A) extruded from the cylinder (50) passes through the interior of base part (211) and comes out of hole (212A) of auxiliary part (212). When it is extruded out of auxiliary part (212), the mixed material (A) is depressurized and foamed into a foamed product (B).

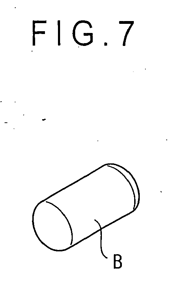

Formed product (B) extruded from hole (212A) is cut off at a designated length by knives (223A, 223B) while rotating with the rotation of axle (222). As shown in Figure 7, a cylinder-shaped foamed product (B) some 10 cm in length can be manufactured.

Besides the items (1) to (15) of anticipated results of No.1 Embodiment, the following results are anticipated in No.2 Embodiment.
(16) By simply adjusting the rotating speed of the axle part (222), a foamed product (B) of any length can be manufactured.
(17) By changing the shape and dimension of hole (212A) on auxiliary part (212), a foamed product (B) of any cross section can be easily manufactured.
(18) The foamed product (B) is made into small cylinders and can be easily stuffed closely as buffer material for packaging precision instruments to provide reliable protection.

### [Variation examples]

The said invention is not limited to the above embodiment options. Any variation and improvement within the scope of the purpose of the said invention are included in the said invention.

For example, the foam material is not limited to polypropylene (2A), and other thermoplastic resins can be used. In this case cornstarch (2B) and talc powder (3A) are added, but no additive addition is also allowed. Other additives can also be used, for example, such as wood powder, activated charcoal, spent tea, etc. in a certain proportion. Addition of such materials is hopefully to provide adsorption function to inhibit growth of bacteria and germs. In summary, composition of foam material is not specified in particular.

In the above embodiment options water (41) is used as foaming fluid, but other fluids such as oil are not excluded.

In the above embodiment options, the initial temperature is specified as 80°C, but is not necessarily fixed. It can be 50°C, for example. Initial temperature can be set above the boiling temperature of foaming fluid depending on raw material.

In the above embodiment options, the final temperature is specified as 230°C, but is not necessarily fixed. It can be 150°C, for example. Final temperature is mainly set as the temperature of total vaporization of foaming fluid or the melting point of foam material.

In the above embodiment options, the heater (60) is set to heat in six stages, but is not necessarily fixed. It can be three stages, for example. The idea is to heat by stages.

In the above embodiment options, raw materials (2, 3) are particulate, and roughly crushed substance is also acceptable.

In the above-mentioned embodiment options, the vibrating mechanism (34) consists of electric motor (341) and cam (342), but is not necessarily fixed. For instance, the electromagnetic vibrator and the like can also be used. The above-mentioned embodiment option has the advantage of effective supply of raw materials.

In the above-mentioned embodiment options, vibrating mechanism (34) is set up at two locations of two storage bins. It is also acceptable to set up in any one storage bin. If supply of material can be effectively made, no vibrating mechanism is also acceptable.

In the above-mentioned embodiment options, bi-axle screws are used, but is not necessarily so. One axle is also acceptable.

In the above-mentioned No. 2 Embodiment, two knives of shearing device (223) are used. One knife is also acceptable. The number of knives is not limited specifically.

### Embodiment Examples

### [Embodiment examples 1 to 3]

In the above-mentioned No. 1 Embodiment, the aperture (82A) diameters and quality of foamed product are shown in Table 2.

Diameter of aperture: 1.8 mm, 2.0 mm, and 2.2 mm.

Good quality of foamed product (B) can be obtained in this case.

**Table 2**

| | Aperture diameter, mm | Foamed product quality |
|---|---|---|
| Embodiment example 1 | 1.8 | Good |
| Embodiment example 2 | 2.0 | Good |
| Embodiment example 3 | 2.2 | Good |
| Reference example 1 | 1.5 | Insufficient foaming |
| Reference example 2 | 2.4 | Insufficient foaming |

### [Reference examples 1-2]

In the above-mentioned No. 1 Embodiment, all the conditions are the same as the above-mentioned Embodiment examples 1-3, except the diameter of aperture (82A). The aperture diameters (82A) and the condition (property) of foamed product are presented in Table 2.

For reference example 1, the aperture diameter is 1.5 mm, and for reference example 2 the aperture diameter is 2.4 mm.

In reference examples 1 and 2 insufficient foaming occurs sometimes.

### Embodiment examples 4-7

In the above-mentioned No. 1 Embodiment, a temperature control device (100) is used to set mold (80) temperature as follows. The set temperatures and corresponding foamed product quality are listed in Table 3.

Set temperatures of the temperature controller (100): 160°C, 180°C, 200°C, and 220°C.

Good quality of foamed product (B) can be obtained.

**Table 3**

| | Set temperature of temperature controller, °C | Foamed product quality |
|---|---|---|
| Embodiment example 4 | 160 | Good |
| Embodiment example 5 | 180 | Good |
| Embodiment example 6 | 200 | Good |
| Embodiment example 7 | 220 | Good |
| Reference example 3 | Room temperature | Partially insufficient foaming |
| Reference example 4 | 240 | Partly scorched due to thermal deterioration and scorching |

### [Reference examples 3-4]

In reference examples 3 and 4 all conditions are the same with the Embodiment examples 4-7 of the No.1 Embodiment, except the mold (80) temperature set by the temperature controller, as shown in Table 3.

Temperature set by the temperature controller: room temperature and 240°C.

At a temperature specified as the room temperature, sometimes insufficient foaming occurs in the foamed product (B) without proper shape.

At a set temperature of 240°C, overheating causes scorching due to thermal deterioration.

The said invention can be used in extrusion molding machine to manufacture the foamed product with tiny internal pores, and also to manufacture buffer materials for packaging to protect precision instruments of electronic instruments, electronic devices and delicate articles such as fruits from outside impact.

## Claims

1. An extrusion molding machine, which is **characterized by** a storage bin for supplying foam material to be molded into foam body, a cylinder and a screw for mixing and transporting the foam material from storage bin, a mold at cylinder front end, a tank provided with piping connecting storage bin and screw and storing the fluid for foaming the above-mentioned foam material, and a heater for melting foam material and at the same time heating the foaming fluid by stages from the initial temperature below its boiling point to the final temperature of its total vaporization.

2. The extrusion molding machine as described in Claim 1, which is **characterized by** using water as foaming fluid. The initial temperature of the above-mentioned heater is set as above 60°C and below 100°C, and the final temperature is set as above 160°C and below 240°C. Such foam material and foaming fluid are heated in six stages.

3. The extrusion molding machine as described in Claim 1 or Claim 2, which is **characterized by** a vibrating mechanism effecting intermittent vibration laterally on the side of the above-mentioned storage bin, with such foam material in particulate state.

4. The extrusion molding machine as described in Claim 3, which is **characterized by** an electric motor and a cam mounted thereon to effect vibration of storage bin by intermittently knocking the side of storage bin by the cam driven by the electric motor.

5. The extrusion molding machine as described in any one of Claims 1-4, which is **characterized by** multiple apertures for extrusion, with such apertures arranged in equal-shaped triangles formed by three neighboring apertures.

6. The extrusion molding machine as described in Claim 5, which is **characterized by** such multiple apertures in circular shape, 1.8 mm-2.2 mm in diameter.

7. The extrusion molding machine as described in any one of Claims 1-6, which is **characterized by** a temperature control device to adjust the temperature of mold in the range of 160°C-220°.

8. The extrusion molding machine as described in any one of Claims 1-7, which is **characterized by** a shearing device in place of the above-mentioned mold, set up at one side of the above-mentioned cylinder, rotating at a certain speed to cut the extruded foam body from the cylinder.
